# EUROPEAN PATENT APPLICATION

(11) **EP 4 471 952 A2**
(43) Date of publication of application: **04.12.2024**
(21) Application number: 24179020.3
(22) Date of filing: 30.05.2024
(51) Int. Cl.: H01M 50/209, H01M 50/244, H01M 50/507, H01M 50/593

(54) **BATTERY CABINET WITH INSULATING TERMINAL PLATE**

(30) Priority: 30.05.2023 US 202363469737 P; 23.05.2024 US 202418672386
(71) Applicant: Vertiv Corporation, Westerville, OH 43082 (US)
(72) Inventor: MEYER, Adam, COLUMBUS, OH 43212 (US); DIXON, William M., LEWIS CENTER, OH 43035 (US)
(74) Representative: Kilburn & Strode LLP

(57) **Abstract**

The present disclosure relates to a battery cabinet including an enclosure, racks for securing batteries within the enclosure, and terminal plates for at least some of the batteries. Each of the terminal plates may include a baseplate, a positive terminal opening in the baseplate providing access to a positive terminal of one of the batteries, a negative terminal opening in the baseplate providing access to a negative terminal of the corresponding battery, and at least one raised insulating feature between the positive terminal opening and the negative terminal opening.

## Description

### TECHNICAL FIELD

The present disclosure relates generally to a battery management system (BMS) and, more particularly, to a cabinet including an insulating terminal plate.

### BACKGROUND

Battery modules in a battery cabinet, such as an uninterruptible power supply (UPS) cabinet, are commonly connected in series using busbars to provide a desired voltage. Because typical batteries have consistently charged terminals, operators must be cautious to avoid short circuits, which could present a safety hazard and harm the system. There is therefore a need to develop systems and methods to address these needs.

### SUMMARY

In a first aspect of the present disclosure, the techniques described herein relate to a battery cabinet including an enclosure; a plurality of racks for securing a plurality of batteries within the enclosure; and a plurality of terminal plates for at least some of the plurality of batteries, each of the plurality of terminal plates including a baseplate; a positive terminal opening in the baseplate providing access to a positive terminal of a corresponding one of the plurality of batteries; a negative terminal opening in the baseplate providing access to a negative terminal of a corresponding battery of the plurality of batteries; and one or more raised insulating features between the positive terminal opening and the negative terminal opening.

In an example, the techniques described herein relate to a battery cabinet, where at least one of a width or a composition of at least one of the one or more raised insulating features is selected to prevent an electrical short between conductors on opposing sides of the at least one of the one or more raised insulating features for a selected voltage range.

In an example, the techniques described herein relate to a battery cabinet, where the selected voltage range has an upper limit greater than a combined voltage of a selected number of batteries.

In an example, the techniques described herein relate to a battery cabinet, where at least one of a position, design, or orientation of the one or more raised insulating features on a corresponding one of the plurality of terminal plates is selected to prevent contact of a busbar connected to one of the positive or negative terminals of any of the plurality of batteries with a busbar connected to another of the positive or negative terminals of another of the plurality of batteries.

In an example, the techniques described herein relate to a battery cabinet, where at least one of the one or more raised insulating features of a first terminal plate of the plurality of terminal plates forms a gap when combined with another one of the one or more raised insulating features of a second terminal plate of the plurality of terminal plates, where the gap provides a space for placement of a busbar between the first terminal plate and the second terminal plate.

In an example, the techniques described herein relate to a battery cabinet, where at least one of the one or more raised insulating features of at least one of the plurality of terminal plates is oriented at a diagonal relative to a line connecting the positive terminal opening and the negative terminal opening.

In an example, the techniques described herein relate to a battery cabinet, where at least one of the one or more raised insulating features of at least one of the plurality of terminal plates is oriented orthogonal to a line connecting the positive terminal opening and the negative terminal opening.

In an example, the techniques described herein relate to a battery cabinet, where at least one of the one or more raised insulating features of at least one of the plurality of terminal plates is formed from at least one of plastic, glass, or ceramic.

In an example, the techniques described herein relate to a battery cabinet, where at least one of the plurality of terminal plates and the corresponding one or more raised insulating features are formed as a single monolithic component.

In an example, the techniques described herein relate to a battery cabinet, where at least one of the plurality of terminal plates and the corresponding one or more raised insulating features are formed as formed from two or more joined components.

In an example, the techniques described herein relate to a terminal plate including a baseplate; a positive terminal opening in the baseplate providing access to a positive terminal of a battery; a negative terminal opening in the baseplate providing access to a negative terminal of the battery; and one or more raised insulating features between the positive terminal opening and the negative terminal opening.

In an example, the techniques described herein relate to a terminal plate, where at least one of a width or a composition of the one or more raised insulating features is selected to prevent an electrical short between conductors on opposing sides of the one or more raised insulating features for a selected voltage range.

In an example, the techniques described herein relate to a terminal plate, where the selected voltage range has an upper limit greater than a combined voltage of a selected number of batteries.

In an example, the techniques described herein relate to a terminal plate, where at least one of a position, design, or orientation of at least one of the one or more raised insulating features on the terminal plate is selected to prevent contact of a busbar connected to one of the positive or negative terminals of the battery with a busbar connected to another of the positive or negative terminals of the battery.

In an example, the techniques described herein relate to a terminal plate, where the terminal plate is a first terminal plate, where the one or more raised insulating features of the first terminal plate forms a gap when combined with one or more raised insulating features of a second terminal plate, where the gap provides a space for placement of a busbar between the first terminal plate and the second terminal plate.

In an example, the techniques described herein relate to a terminal plate, where the one or more raised insulating features are oriented at a diagonal relative to a line connecting the positive terminal opening and the negative terminal opening.

In an example, the techniques described herein relate to a terminal plate, where the one or more raised insulating features are oriented orthogonal to a line connecting the positive terminal opening and the negative terminal opening.

In an example, the techniques described herein relate to a terminal plate, where the one or more raised insulating features are formed from at least one of plastic, glass, or ceramic.

In an example, the techniques described herein relate to a terminal plate, where the terminal plate and the one or more raised insulating features are formed as a single monolithic component.

In an example, the techniques described herein relate to a terminal plate, where the terminal plate and the one or more raised insulating features are formed as two or more joined components.

It is to be understood that both the foregoing general description and the following detailed description are exemplary and explanatory only and are not necessarily restrictive of the invention as claimed. The accompanying drawings, which are incorporated in and constitute a part of the specification, illustrate examples of the invention and together with the general description, serve to explain the principles of the invention.

### BRIEF DESCRIPTION OF DRAWINGS

The numerous advantages of the disclosure may be better understood by those skilled in the art by reference to the accompanying figures.
FIG. 1 is a block diagram of an energy management system, in accordance with one or more examples of the present disclosure.
FIG. 2A is a perspective view of a terminal plate, in accordance with one or more examples of the present disclosure.
FIG. 2B is a front view of a cabinet including two terminal plates covering two connected batteries 104, in accordance with one or more examples of the present disclosure.
FIG. 3A is a perspective cross-section view of the terminal plate of FIGS. 2A-2B with attached electrical shields, in accordance with one or more examples of the present disclosure.
FIG. 3B is a perspective view of a cabinet with a plurality of terminal plates configured as illustrated in FIG. 2B, each with electrical shields, in accordance with one or more examples of the present disclosure.

### DETAILED DESCRIPTION

Reference will now be made in detail to the subject matter disclosed, which is illustrated in the accompanying drawings. The present disclosure has been particularly shown and described with respect to certain examples and specific features thereof. The examples set forth herein are taken to be illustrative rather than limiting. It should be readily apparent to those of ordinary skill in the art that various changes and modifications in form and detail may be made without departing from the spirit and scope of the disclosure.

Examples of the present disclosure are directed to systems and methods providing a battery cabinet with an insulating terminal plate to increase operator safety when connecting batteries together.

In some examples, an energy management system includes a cabinet with multiple batteries, which may be controlled by a battery management system (BMS). Such a system may be operated as, but is not limited to, an uninterruptible power supply (UPS). In a general sense, the batteries may be connected or arranged in any suitable manner. However, in some applications, it may be desirable to connect multiple batteries in series to provide a higher voltage than a voltage generated by any of the batteries individually. In some examples, the energy management system includes one or more terminal plates located on the cabinet near the terminals of the batteries, where the terminal plates each include a positive terminal opening and a negative terminal opening for the terminals of a corresponding battery (or connections to the terminals a corresponding battery) and a raised insulating feature between the positive and negative terminal openings. In this way, the raised insulating feature may help prevent or decrease the chance of electrical shorts when installing busbars between the terminals of various batteries. For example, the raised insulating feature may prevent a busbar attached at one end to one terminal from swinging and making contact with another terminal, busbar, or unintended surface.

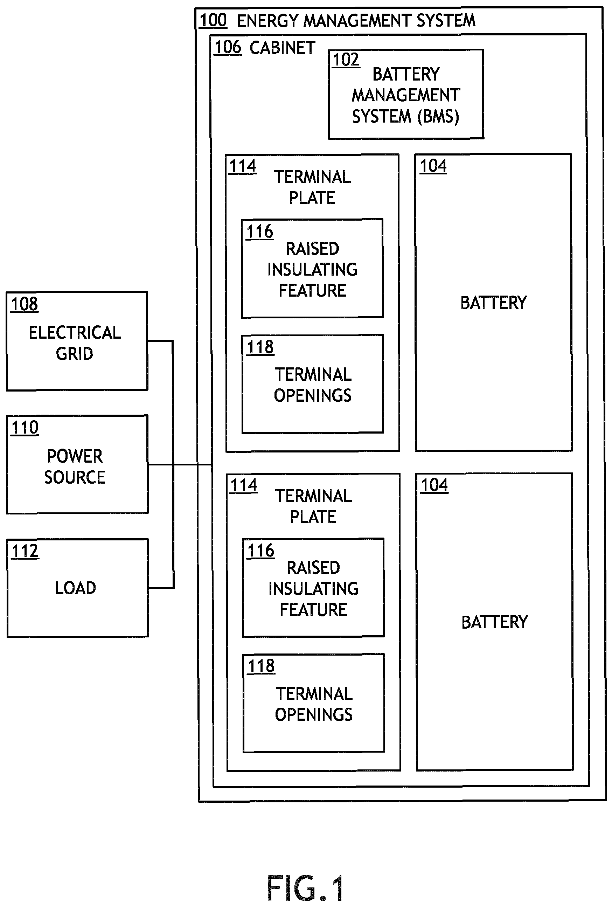

Referring now to FIGS. 1-3B, systems and methods providing an energy management system including terminal plates having raised insulating features are described in greater detail, in accordance with one or more examples of the present disclosure.

FIG. 1 is a block diagram of an energy management system 100, in accordance with the first aspect or one or more examples of the present disclosure.

The energy management system 100 includes a battery management system (BMS) 102 connected to one or more batteries 104. The energy management system 100 may include any number or type of batteries 104 such as, but not limited to, lithium-ion, nickel-cadmium, or lead acid. Further, a battery 104 may be formed as a single unit or as multiple units connected in either series or parallel. For example, a battery 104 may be formed as a rack of battery sub-units.

Any of the batteries 104 includes components to perform various functions such as, but not limited to, monitoring, control, or communications. For example, a battery 104 may include one or more sensors to monitor properties such as, but not limited to, charge, a charging state, a voltage, incoming or outgoing current, temperature, or predicted lifespan. As another example, a battery 104 may include charging circuitry to control charge/discharge rates, circuity to prevent over-voltage, over-current, or over-temperature conditions, or the like.

The BMS 102 may include any type of battery management or control system known in the art and may perform a variety of operations. The BMS 102 may monitor various aspects of any of the batteries 104 including, but not limited to, a charge, a charging state, a voltage, incoming or outgoing current, temperature, or predicted lifespan. The BMS 102 may perform various control functions such as, but not limited to, load balancing between batteries 104, charging control, over-voltage protection, over-current protection, or over-heating protection. The BMS 102 may communicate with additional systems, such as, but not limited to, an external control system, an additional BMS 102, the batteries 104, or the like. For example, the BMS 102 may receive power supply data associated with available power or predicted power availability, load data associated with current or predicted load conditions, data from any of the batteries 104, or the like. Accordingly, the BMS 102 may include one or more internal controllers (not shown), sensors, communication systems, or the like to perform the various functions.

The energy management system 100 includes one or more cabinets 106 providing an enclosure to secure and/or house various components such as, but not limited to, the BMS 102 or any of the batteries 104. For example, a cabinet 106 may include one or more racks (e.g., a rack system) and may further include various openings, platforms, rails, guides, or the like suitable for housing the various components within an enclosure. As will be described in greater detail below, a cabinet 106 may further include components suitable for providing electrical connections with or between any installed components.

The cabinet 106 further includes one or more terminals to provide electrical connections between various components within the energy management system 100 and/or to external systems. For example, the terminals may provide connections to the batteries 104 to be managed by the BMS 102. As another example, the terminals may provide connections to external systems such as, but not limited to, an electrical grid 108, a power source 110 (e.g., solar energy source, a wind energy source, or the like), or a load 112.

The energy management system 100 may provide a variety of different functions, which may be managed at least in part by the BMS 102. The energy management system 100 operates as an uninterruptible power supply (UPS). In this configuration, the load 112 may be powered by any combination of a grid 108 or a power source 110 under typical conditions, but may be powered by the batteries 104 when the grid 108 and/or the power source 110 provide insufficient power. Further, the batteries 104 may be charged by the grid 108 and/or the power source 110 and/or may provide power back to the grid 108 and/or the power source 110.

The cabinet 106 includes one or more terminal plates 114 at locations near battery terminals of one or more of the batteries 104, where a terminal plate 114 includes a raised insulating feature 116 between terminal openings 118 near the battery terminals. Any of the terminal plates 114 may be attached to the cabinet 106 and thus may be part of the cabinet 106 whether or not a battery 104 is installed or may be attached directly to a battery 104. Alternatively, a terminal plate 114 may attach directly to one or more batteries 104 or may be directly integrated into a housing of a battery 104. Accordingly, a terminal plate 114 need not necessarily connect directly to a cabinet 106.

A raised insulating feature 116 may be formed from any electrically-insulating material (e.g., a material having a relatively low resistivity) such as, but not limited to, glass, plastic, or ceramic. The material and/or the thickness of raised insulating feature 116 is designed to provide an electrical resistivity sufficient to prevent arcing between terminals of one or more batteries 104 (e.g., multiple batteries 104 connected in series) with known voltages.

A terminal plate 114 may be formed from any suitable material. The terminal plate 114 may be formed from an insulating material, such as, but not limited to, glass, plastic, or ceramic. A terminal plate 114 may include at least some conductive material.

A terminal plate 114 and/or a raised insulating feature 116 may further be formed in any suitable form factor and from any number of components (e.g., pieces). A terminal plate 114 and a raised insulating feature 116 may be formed from as a single monolithic component. For example, a terminal plate 114 with a raised insulating feature 116 may be formed as a monolithic molded plastic component. A terminal plate 114 and a raised insulating feature 116 may be formed from two or more components, which may be joined together. Such components may be joined using any technique known in the art such as, but not limited to, interlocking pieces, screws, snaps, or the like. For instance, a raised insulating feature 116 may be formed as a separate component that may be attached to a base portion of the terminal plate 114. Such a configuration may enable an operator to selectively adjust an orientation or location of a raised insulating feature 116 and/or select between various raised insulating features 116 of different designs (e.g., to accommodate different batteries 104 from different manufacturers, different connections between batteries 104, or the like).

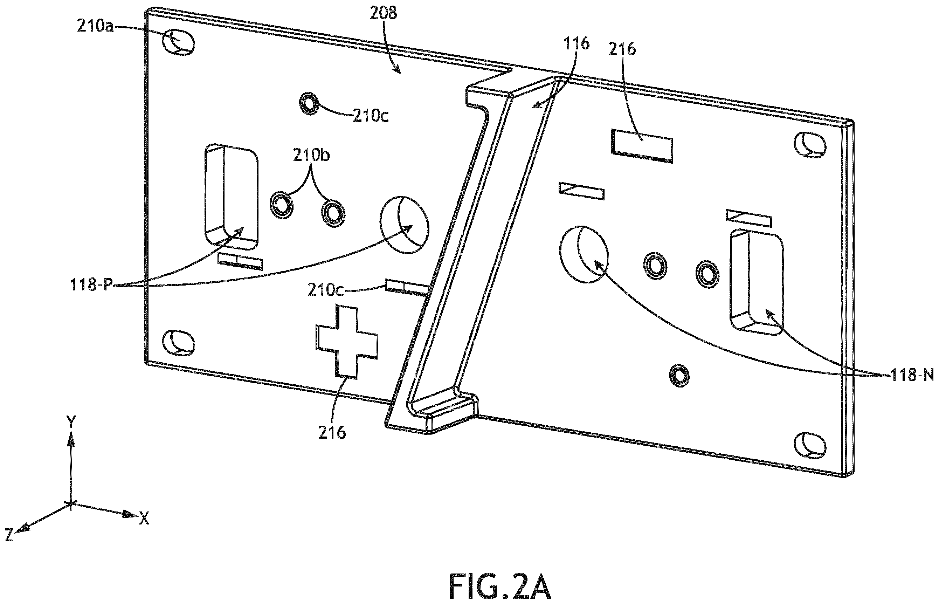

FIGS. 2A-3B depict various configurations of terminal plates 114, in accordance with one or more examples of the present disclosure.

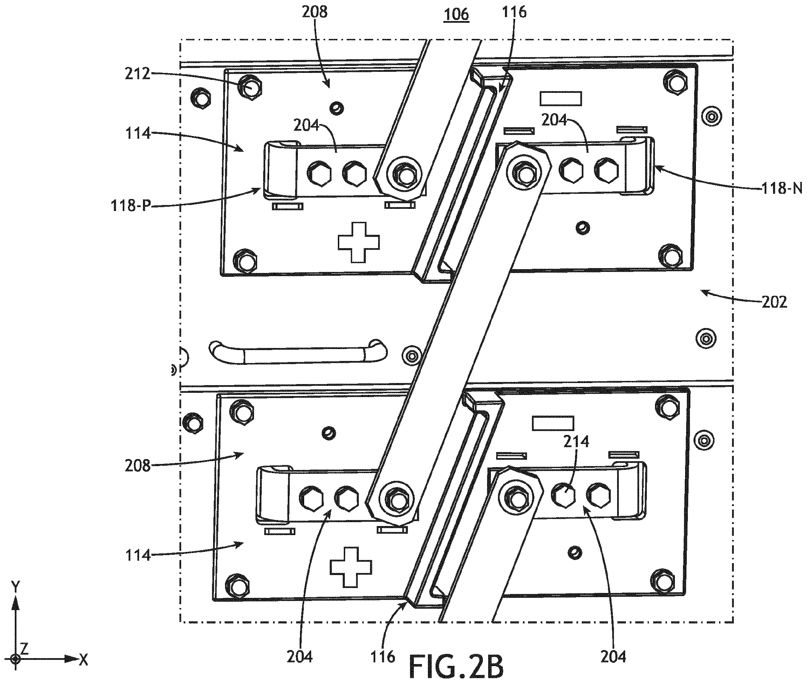

FIG. 2A is a perspective view of a terminal plate 114, in accordance with one or more examples of the present disclosure. FIG. 2B is a front view of a cabinet 106 including two terminal plates 114 covering two connected batteries 104 (not shown). In particular, FIG. 2B depicts a configuration in which batteries 104 in the cabinet 106 are installed with positive battery terminals on one side of a front panel 202 and negative battery terminals on another side of the front panel 202. FIG. 2B further depicts a configuration in which the batteries 104 are connected in series, though this is merely illustrative. The batteries 104 in a cabinet 106 may generally be connected in any arrangement.

A terminal plate 114 is formed as a plate that substantially covers the battery terminals, but may include one or more positive terminal openings 118-P and one or more negative terminal openings 118-N for access to the respective battery terminals. The positive terminal openings 118-P and/or the negative terminal openings 118-N may allow direct access to the respective battery terminals or may provide access for additional busbars or other conductors. As an illustration, FIG. 2B depicts terminal busbars 204 connected to the battery terminals and protruding through positive terminal openings 118-P and negative terminal openings 118-N to provide a mounting point for a connection busbar 206 used to connect battery terminals of different batteries 104 together. A terminal plate 114 may generally include any number of terminal openings 118 of any shape to allow for any design of a battery 104 and/or any desired hardware for connecting batteries 104 together. In this way, the particular design of the terminal openings 118 herein is merely illustrative and not limiting.

A terminal plate 114 includes at least one raised insulating feature 116 between at least one positive terminal opening 118-P and at least one negative terminal opening 118-N. The term raised is used herein to denote that the raised insulating feature 116 is extended from a surface of a baseplate 208 (e.g., in a Z direction) relative to portions of the terminal plate 114 located near conductors in contact with the battery terminals (e.g., connection busbars 206, terminal busbars 204, or the like). As an illustration, the terminal plate 114 depicted in FISG. 2A-2B includes a substantially planar baseplate 208 in areas near the terminal openings 118 and a single raised insulating feature 116 located between the positive terminal openings 118-P and the negative terminal openings 118-N. However, this is merely illustrative and not limiting. A terminal plate 114 may have any number or design of raised insulating features 116.

A raised insulating feature 116 may restrict placement and/or motion of a busbar (e.g., a connection busbar 206) during installation and/or removal. For example, a raised insulating feature 116 may have a height selected to be higher than an expected height of a connection busbar 206 and may further have a position, design, and/or orientation selected to restrict motion of a partially attached connection busbar 206. In a general sense, a raised insulating feature 116, or a portion thereof, may have any position, design, and/or orientation on the terminal plate 114 between positive and negative terminal openings 118. For instance, a raised insulating feature 116, or a portion thereof, may be positioned, designed, and/or oriented to be orthogonal to a line (e.g., an imaginary line) between positive and negative terminal openings 118 or diagonal (e.g., at a non-orthogonal angle) with respect to such a line. Further, the position, design, and/or orientation of a raised insulating feature 116 on one terminal plate 114 may be selected to complement a raised insulating feature 116 on an adjacent terminal plate 114.

As an illustration, the raised insulating feature 116 in FIGS. 2A-2B have a height greater than a height of an installed connection busbar 206 and is diagonally oriented between the positive terminal openings 118-P and the negative terminal openings 118-N (e.g., between a line connecting the positive terminal openings 118-P and the negative terminal openings 118-N). In this configuration, a connection busbar 206 may connect a positive battery terminal of one battery 104 to a negative battery terminal of another battery 104 (e.g., either directly or via terminal busbars 204 as shown in FIG. 2B). However, the placement position or motion of the connection busbar 206 may be restricted to a diagonal space or gap created by the adjacent diagonally-oriented raised insulating features 116. It is contemplated herein that restricting the motion of a connection busbar 206 during installation and/or removal may facilitate both the safety of an operator and prevent damage to the energy management system 100 by preventing or at least reducing a possibility of an electrical short caused by the connection busbar 206 contacting both positive and negative battery terminals of any of the batteries 104. For instance, an operator may install the connection busbar 206 shown in FIG. 2B by first connecting one end of the connection busbar 206 to a terminal busbar 204 of one battery 104 and then connecting the other end of the connection busbar 206 to a terminal busbar 204 of another battery 104. In the middle of the installation process when only one end of the connection busbar 206 is fixed, the raised insulating features 116 may restrict the motion of the connection busbar 206 to prevent an electrical short.

As another example, a raised insulating feature 116 may have a width in a plane parallel to the baseplate 208 (e.g., an XY plane) sufficient to prevent or mitigate electrical shorts between conductors on opposing sides of the raised insulating feature 116. It is understood that a width sufficient to prevent or mitigate electrical shorts between conductors on opposing sides of the raised insulating feature 116 may generally depend on various factors such as, but not limited to electrical properties of the raised insulating feature 116 related to its composition (e.g., a resistivity, a breakdown voltage, or the like). In this way, the design and composition of the raised insulating feature 116 may be selected together to prevent or mitigate electrical shorts between conductors on opposing sides of the raised insulating feature 116 based on an expected voltage range. For instance, the voltage range may have an upper limit greater than a combined voltage for a selected number of batteries 104 of a given type expected to be used in a given application.

Referring generally to FIGS. 2A-2B, it is to be understood, however, that the particular configuration of the batteries 104, the serial connections thereof, and the associated designs of the raised insulating features 116 illustrated in FIGS. 2A-2B are provided solely for illustrative purposes and should not be interpreted as limiting. Rather, a terminal plate 114 may be designed with a raised insulating feature 116 suitable for accommodating any design, orientation, or connection scheme of batteries 104 within a cabinet 106.

Additional features of a terminal opening 118 are now described in greater detail, in accordance with one or more examples of the present disclosure.

A terminal plate 114 may include one or more mounting points for securing various components to the terminal plate 114 and/or securing the terminal plate 114 to an additional component such as, but not limited to, the cabinet 106 or the batteries 104. The mounting points may include any features suitable for mounting or coupling with additional components such as, but not limited to, grooves, snaps, retention tabs, or holes (e.g., unthreaded or threaded holes).

For example, FIGS. 2A-2B illustrate a terminal plate 114 having first mounting points 210a shown as unthreaded holes suitable for mounting the terminal plate 114 to the cabinet 106 via fasteners 212 (e.g., bolts or any other suitable fastener) and second mounting points 210b suitable for securing the terminal busbars 204 or other components via fasteners 214.

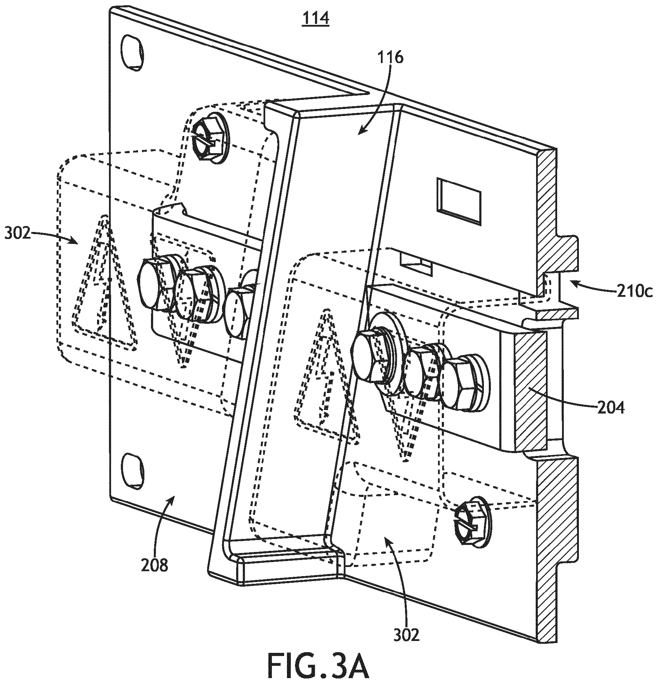

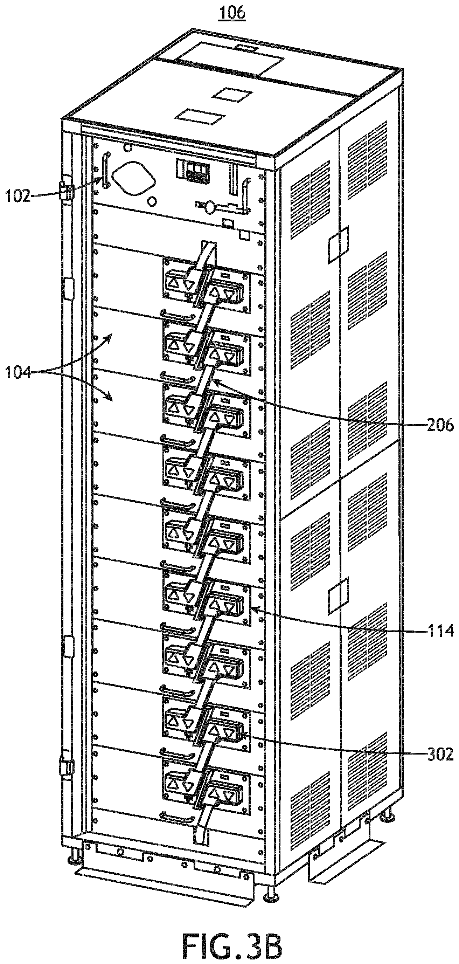

A terminal opening 118 includes various features suitable for securing one or more electrical shields 302. FIG. 3A is a perspective cross-section view of the terminal plate 114 of FIGS. 2A-2B with attached electrical shields 302, in accordance with one or more examples of the present disclosure. FIG. 3B is a perspective view of a cabinet 106 with a plurality of terminal plates 114 configured as illustrated in FIG. 2B, each with electrical shields 302, in accordance with one or more examples of the present disclosure. In particular, the terminal plates 114 included third mounting points 210c shown as a combination of threaded and unthreaded holes to accept and secure the electrical shields 302.

A terminal plate 114 may further include various markings. For example, the terminal plate 114 illustrated in FIGS. 2A-2B includes polarity markings 216 designating the positive and negative battery terminals.

The herein described subject matter sometimes illustrates different components contained within, or connected with, other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "connected" or "coupled" to each other to achieve the desired functionality, and any two components capable of being so associated can also be viewed as being "couplable" to each other to achieve the desired functionality. Specific examples of couplable include but are not limited to physically interactable and/or physically interacting components and/or wirelessly interactable and/or wirelessly interacting components and/or logically interactable and/or logically interacting components.

It is believed that the present disclosure and many of its attendant advantages will be understood by the foregoing description, and it will be apparent that various changes may be made in the form, construction, and arrangement of the components without departing from the disclosed subject matter or without sacrificing all of its material advantages. The form described is merely explanatory, and it is the intention of the following claims to encompass and include such changes. Furthermore, it is to be understood that the disclosure is defined by the appended claims.

## Claims

1. A battery cabinet comprising:
an enclosure;
a plurality of racks for securing a plurality of batteries within the enclosure; and
a plurality of terminal plates for at least some of the plurality of batteries, each of the plurality of terminal plates comprising:
a baseplate;
a positive terminal opening in the baseplate providing access to a positive terminal of a corresponding one of the plurality of batteries;
a negative terminal opening in the baseplate providing access to a negative terminal of a corresponding battery of the plurality of batteries; and
one or more raised insulating features between the positive terminal opening and the negative terminal opening.

2. The battery cabinet of claim 1, wherein at least one of a width or a composition of at least one of the one or more raised insulating features is selected to prevent an electrical short between conductors on opposing sides of the at least one of the one or more raised insulating features for a selected voltage range, and preferably wherein the selected voltage range has an upper limit greater than a combined voltage of a selected number of batteries.

3. The battery cabinet of claim 1, wherein at least one of a position, design, or orientation of the one or more raised insulating features on a corresponding one of the plurality of terminal plates is selected to prevent contact of a busbar connected to one of the positive or negative terminals of any of the plurality of batteries with a busbar connected to another of the positive or negative terminals of another of the plurality of batteries.

4. The battery cabinet of claim 1, wherein at least one of the one or more raised insulating features of a first terminal plate of the plurality of terminal plates forms a gap when combined with another one of the one or more raised insulating features of a second terminal plate of the plurality of terminal plates, wherein the gap provides a space for placement of a busbar between the first terminal plate and the second terminal plate, or wherein at least one of the one or more raised insulating features of at least one of the plurality of terminal plates is oriented at a diagonal relative to a line connecting the positive terminal opening and the negative terminal opening, or wherein at least one of the one or more raised insulating features of at least one of the plurality of terminal plates is oriented orthogonal to a line connecting the positive terminal opening and the negative terminal opening, or wherein at least one of the one or more raised insulating features of at least one of the plurality of terminal plates is formed from at least one of plastic, glass, or ceramic.

5. The battery cabinet of claim 1, wherein at least one of the plurality of terminal plates and the corresponding one or more raised insulating features are formed as a single monolithic component, or formed from two or more joined components.

6. A terminal plate comprising:
a baseplate;
a positive terminal opening in the baseplate providing access to a positive terminal of a battery;
a negative terminal opening in the baseplate providing access to a negative terminal of the battery; and
one or more raised insulating features between the positive terminal opening and the negative terminal opening.

7. The terminal plate of claim 6, wherein at least one of a width or a composition of the one or more raised insulating features is selected to prevent an electrical short between conductors on opposing sides of the one or more raised insulating features for a selected voltage range.

8. The terminal plate of claim 7, wherein the selected voltage range has an upper limit greater than a combined voltage of a selected number of batteries.

9. The terminal plate of claim 6, wherein at least one of a position, design, or orientation of at least one of the one or more raised insulating features on the terminal plate is selected to prevent contact of a busbar connected to one of the positive or negative terminals of the battery with a busbar connected to another of the positive or negative terminals of the battery.

10. The terminal plate of claim 6, wherein the terminal plate is a first terminal plate, wherein the one or more raised insulating features of the first terminal plate forms a gap when combined with one or more raised insulating features of a second terminal plate, wherein the gap provides a space for placement of a busbar between the first terminal plate and the second terminal plate.

11. The terminal plate of claim 6, wherein the one or more raised insulating features are oriented at a diagonal relative to a line connecting the positive terminal opening and the negative terminal opening.

12. The terminal plate of claim 6, wherein the one or more raised insulating features are oriented orthogonal to a line connecting the positive terminal opening and the negative terminal opening.

13. The terminal plate of claim 6, wherein the one or more raised insulating features are formed from at least one of plastic, glass, or ceramic.

14. The terminal plate of claim 6, wherein the terminal plate and the one or more raised insulating features are formed as a single monolithic component.

15. The terminal plate of claim 6, wherein the terminal plate and the one or more raised insulating features are formed as two or more joined components.
